# EUROPEAN PATENT APPLICATION

(11) **EP 4 804 660 A1**
(43) Date of publication of application: **09.09.2026**
(21) Application number: 23957224.1
(22) Date of filing: 01.11.2023
(51) Int. Cl.: H04W 64/00

(54) **WIRELESS COMMUNICATION METHOD, COMMUNICATION DEVICE AND APPARATUS**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Penza, Giancarlo
(86) International application number: PCT/CN2023/129174
(87) International publication number: WO 2025/091351

(57) **Abstract**

Provided are a wireless communication method, a communication device and an apparatus. The method comprises: a first communication device determining a first identity, wherein the first identity is used for indicating a usage condition and/or a usage scenario of a target model; alternatively, the first identity is used for determining the target model from among models having a first function. In the present application, a usage condition and/or a usage scenario of a target model is indicated by means of a first identity; alternatively, by means of the first identity, the target model is determined from among models having a first function. Different models having the first function can be distinguished on the basis of the usage condition and/or the usage scenario of the target model, thereby narrowing the range for determining the target model, and helping to reduce the overhead of determining the target model.

## Description

### TECHNICAL FIELD

The present application relates to the technical field of wireless communication, and more particularly, to a wireless communication method, a communication device and apparatus.

### BACKGROUND

In the field of wireless communication, big data models (such as artificial intelligence/machine learning (AI/ML) models) have been widely used in dealing with communication problems. When applying big data models, the determination of a target model by a communication device is crucial. Generally, the communication device may determine the target model through a model identity (ID), and different model IDs may be used to determine different models. However, as the number of models increases, determining a target model through a model ID may incur significant overhead.

### SUMMARY

Embodiments of the present application provide a wireless communication method, a communication device and apparatus. This is introduced below from the following aspects.

According to a first aspect, there is provided a wireless communication method. The method includes that: a first communication device determines a first identity. The first identity is used to indicate a usage condition and/or a usage scenario of a target model, or the first identity is used to determine the target model from models having a first function.

According to a second aspect, there is provided a communication device, the communication device being a first communication device. The communication device includes: a determining module for determining a first identity. The first identity is used to indicate a usage condition and/or a usage scenario of a target model, or the first identity is used to determine the target model from models having a first function.

According to a third aspect, there is provided a communication device. The communication device includes a transceiver, a memory and a processor. The memory is used to store a program, and the processor is used to call the program in the memory and control the transceiver to receive or send a signal, to cause the communication device to perform the method as described in any item of the first aspect.

According to a fourth aspect, there is provided an apparatus including a processor. The processor is used for calling a program from a memory, to cause the apparatus to perform the method as described in any item of the first aspect.

According to a fifth aspect, there is provided a chip including a processor. The processor is used for calling a program from a memory, to cause a device on which the chip is mounted to perform the method as described in any item of the first aspect.

According to a sixth aspect, there is provided a computer readable storage medium, having stored thereon a program that causes a computer to perform the method as described in any item of the first aspect.

According to a seventh aspect, there is provided a computer program product. The computer program product includes a program that causes a computer to perform the method as described in any item of the first aspect.

According to a eighth aspect, there is provided a computer program, causing a computer to perform the method as described in any item of the first aspect.

In the present application, the usage condition and/or usage scenario of the target model is indicated through the first identity, or the target model is determined from the models having the first function through the first identity. Based on the usage condition and/or usage scenario of the target model, different models having the first function can be distinguished, thereby narrowing the scope of determining the target model, helping to reduce the overhead of determining the target model.

### BRIEF DESCRIPTION OF THE DRAWINGS

FIG. 1 is an example diagram of a system architecture of a wireless communication system to which the embodiments of the present application may be applied.
FIG. 2A is an example diagram of a method for solving a CSI feedback problem of a communication system by AI.
FIG. 2B is an example diagram of a method for solving a positioning problem of a communication system by AI.
FIG. 2C is an example diagram of a method for solving a beam management problem of a communication system by AI.
FIG. 2D is an example diagram of a method for solving a channel estimation problem of a communication system by AI.
FIG. 3 is a schematic flowchart of a wireless communication method according to an embodiment of the present application.
FIG. 4A is a schematic flowchart of a method for indicating a first identity supported by a communication device.
FIG. 4B is a schematic flowchart of another method for indicating a first identity supported by a communication device.
FIG. 5A is a schematic flowchart of a method for indicating a first identity required by a communication device.
FIG. 5B is a schematic flowchart of another method for indicating a first identity required by a communication device.
FIG. 6 is a schematic diagram of a structure of a communication device according to an embodiment of the present application.
FIG. 7 is a schematic diagram of a structure of an apparatus according to an embodiment of the present application.

### DETAILED DESCRIPTION

Hereinafter, the technical solutions in the embodiments of the present application will be described clearly and completely with reference to the accompanying drawings in the embodiments of the present application, and it is apparent that the described embodiments are only part of the embodiments of the present application, but not all the embodiments.

### Communication system architecture

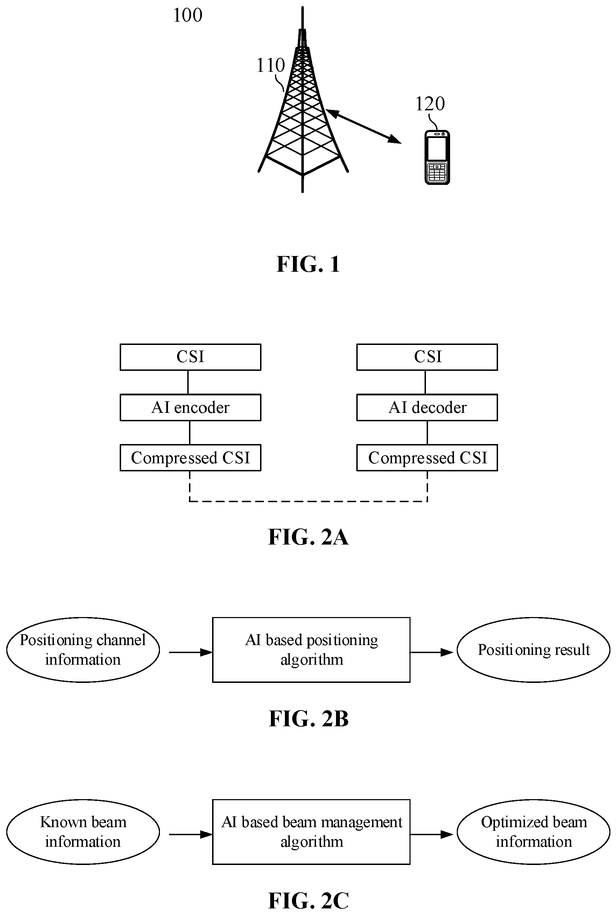

FIG. 1 is an example diagram of a system architecture of a wireless communication system 100 to which the embodiments of the present application may be applied. The wireless communication system 100 may include a network device 110 and a terminal device 120. The network device 110 may be a device that communicates with the terminal device 120. The network device 110 may provide communication coverage for a specific geographic area and may communicate with the terminal device 120 located within the coverage area.

FIG. 1 exemplarily illustrates one network device and one terminal device. Optionally, the wireless communication system 100 may include one or more network devices 110 and/or one or more terminal devices 120. For a network device 110, the one or more terminal devices 120 may all be located within the network coverage range of the network device 110; or may all be located outside the network coverage range of the network device 110; or part of the one or more terminal devices may be located within the coverage range of the network device 110, and the other part may be located outside the network coverage range of the network device 110, which is not limited in the embodiment of the present application.

Optionally, the wireless communication system 100 may further include other network entities, such as a network controller and a mobility management entity, which is not limited in the embodiment of the present application.

It should be understood that the technical solutions of the embodiments of the present application can be applied to various communication systems, such as a fifth generation (5G) system or a new radio (NR) system, a long term evolution (LTE) system, an LTE frequency division duplex (FDD) system, an LTE time division duplex (TDD) system, and the like. The technical solution provided in the present application can also be applied to future communication systems, such as a sixth generation mobile communication system, a satellite communication system, and the like.

The terminal device in the embodiment of the present application may also be referred to as user equipment (UE), an access terminal, a subscriber unit, a subscriber station, a mobile flatform, a mobile station (MS), a mobile terminal (MT), a remote station, a remote terminal, a mobile device, a user terminal, a terminal, a wireless communication device, a user agent or a user apparatus. The terminal device in the embodiment of the present application may be a device that provides voice and/ or data connectivity to a user, and may be used to connect people, objects and machines, for example, a handheld device having a wireless connection function, an in-vehicle device, or the like. The terminal device in the embodiment of the present application may be a mobile phone, a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the UE may be used to act as a base station. For example, a UE may act as a scheduling entity that provides sidelink signals between UEs in vehicle-to-everything (V2X) or device-to-device (D2D), etc. For example, the cellular telephone and the automobile communicate with each other by using sidelink signals. Communication between the cellular phone and smart home device does not require the relay of communication signals through the base station.

The network device in the embodiment of the present application may be a device for communicating with a terminal device. The network device may also be referred to as an access network device or a radio access network device, for example, the network device may be a base station. The network device in the embodiment of the present application may refer to a radio access network (RAN) node (or device) that enables the terminal device to be accessed the wireless network. The base station may broadly cover or be replaced with the following various names: a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point, a transmission node, a receive-send node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a master node, or the like, or a combination thereof. The base station may also refer to a communication module, modem, or chip disposed within the aforementioned apparatus or apparatus. The base station may also be a mobile switching center, or a device functioning as a base station in device-to-device (D2D), a vehicle-to-everything (V2X), a machine-to-machine (M2M) communication, or a network-side device in a 6G network, or a device functioning as a base station in a future communication system, or the like. The base stations may support networks of the same or different access technologies. The embodiments of the present application do not limit the specific technology and the specific device form adopted by the network device.

The base station may be fixed or mobile. For example, a helicopter or drone may be configured to act as a mobile base station, and one or more cells may move according to the position of the mobile base station. In other examples, a helicopter or drone may be configured as a device to communicate with another base station.

In some deployments, the network device in the embodiment of the present application may refer to a CU or a DU, or the network device includes a CU and a DU. The gNB may also include an AAU.

The network device and terminal device may be deployed on land, including indoor or outdoor, handheld, or vehicle-mounted; they may also be deployed on the water; they may also be deployed in the air (e.g., on aircraft, balloons and satellites). In the embodiment of the present application, the scenario in which the network device and the terminal device are located is not limited.

It should be understood that all or part of the functions of the communication device in the present application may also be implemented by software functionality running on hardware, or by virtualization functionality instantiated on a platform, such as a cloud platform.

### Application of AI/ML Model in Communication System

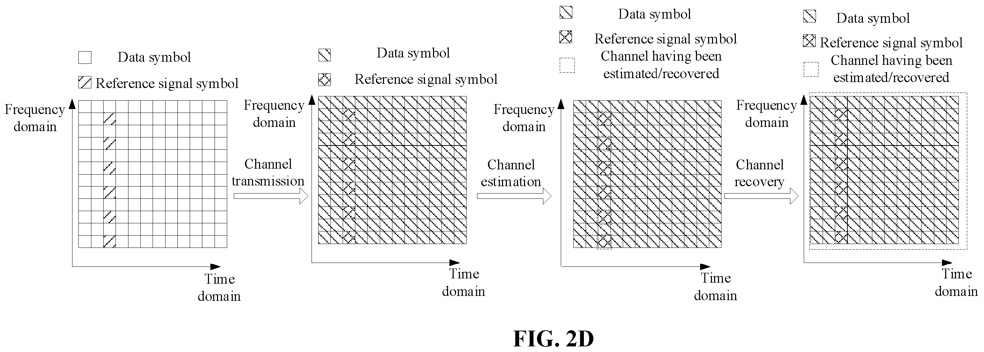

In recent years, there have been more and more potential applications of AI-based solutions in the wireless communication system, and some common problems in the communication system can be effectively solved by AI. For example, as illustrated in FIG. 2A, a channel state information (CSI) feedback problem of a communication system may be solved by AI. Referring to FIG. 2A, through the introduction of an AI encoder and an AI decoder, compression and feedback of CSI information may be realized based on AI. As also illustrated in FIG. 2B, a positioning problem of a communication system may also be solved by AI. Referring to FIG. 2B, a high-precision positioning result may be obtained through an AI-based positioning algorithm combined with positioning channel information. Continuing as illustrated in FIG. 2C, a beam management problem of a communication system may also be solved by AI. Referring to FIG. 2C, preferred or more refined beam information may be obtained through an AI-based beam management algorithm combined with known beam information, or prediction of beam information at a future time may be obtained through an AI-based beam management algorithm combined with known beam information. As also illustrated in FIG. 2D, a channel estimation problem of a communication system may also be solved by AI. Referring to FIG. 2D, a high performance estimation of a given channel may be achieved by the AI channel estimator.

When solving communication system problems based on AI, there are usually a large number of different solutions, that is, there are a large number of different target models. For example, there may be different solutions for different problems. For another example, there may be different solutions to the same problem. For yet another example, for the same solution, there may be different deployment and optimization solutions for different execution subjects, different usage environments, different data, different target accuracies, etc. Therefore, when solving a problem based on AI, there may be multiple different candidate models. At this time, the communication device is crucial to the determination of the target model.

In a communication system, a target model may usually be determined by a model function. However, this determination manner can only stay at the granularity of "function", and it is difficult to accurately reflect the specific target model. Therefore, the granularity of this determination manner is coarse, which may lead to the problem of inaccurate model determination. Based on this, a target model determination manner based on a model ID is proposed in the related art. Different models may correspond to different model IDs, so the model ID may be used to accurately determine the target model from a large number of models. However, as the number of models increases, determining the target model by the model ID may incur a large overhead.

Based on the above problems, embodiments of the present application will be described in detail below.

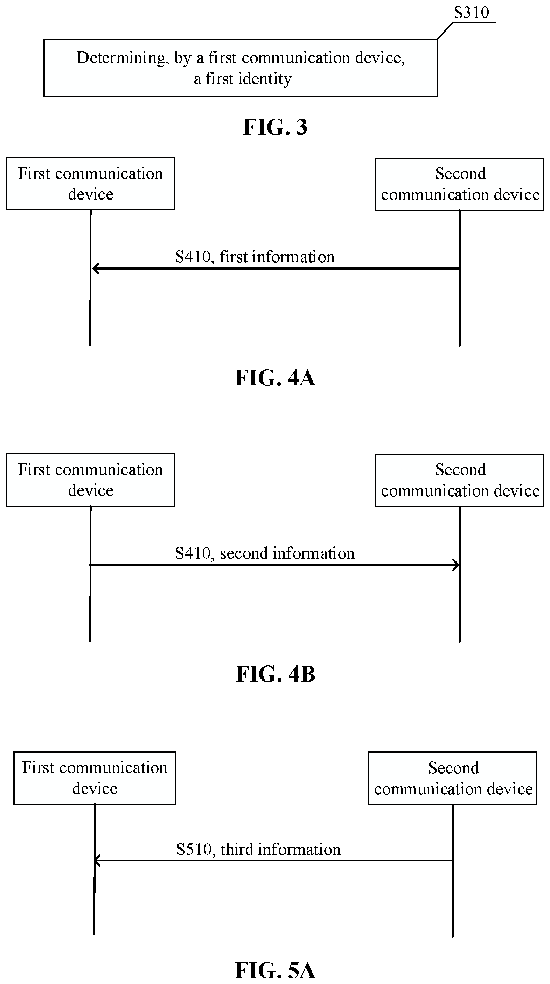

As illustrated in FIG. 3, an embodiment of the present application provides a wireless communication method. The method may be applied to a communication device, for example, a network device 110 or a terminal device 120 illustrated in FIG. 1. For ease of understanding, a communication device to which the method is applied is denoted below as a first communication device.

Referring to FIG. 3, in S310, the first communication device determines a first identity. The first identity may indicate a usage condition and/or a usage scenario of the target model, or the first identity may be used to determine the target model from the models having the first function. The model here may be the aforementioned AI/ML model, and the models having the first function may have differences in usage conditions and/or usage scenarios, so the first communication device may determine the target model from the models having the first function based on the first identity.

In the present application, the usage condition and/or usage scenario of the target model is indicated through the first identity, or the target model is determined from the models having the first function through the first identity. Based on the usage condition and/or usage scenario of the target model, different models having the first function can be distinguished, thereby narrowing the scope of determining the target model, helping to reduce the overhead of determining the target model.

The first identity will be described in detail below, and in some implementations, the first identity may be associated with a usage condition and/or a usage scenario of the target model. The models having the first function typically differ under different usage conditions and/or usage scenarios, and thus the usage conditions and/or usage scenarios of the models can be used to distinguish different models having the first function. For example, in a model with a CSI feedback function, different models may be used under different conditions, different configurations, or different scenarios.

Further, the first identity may be determined based on one or more of the following identities: a second identity, a third identity, a fourth identity, a fifth identity, a sixth identity, a seventh identity, an eighth identity, a ninth identity, a tenth identity, an eleventh identity, a twelfth identity, or a thirteenth identity.

As an example, the first identity may be determined based on the second identity, e.g. the first identity may be the second identity. In an embodiment of the present application, the second identity may correspond to a serial number of the target model, and the serial number of the target model may be a serial number of the target model in the models having the first function. The serial number of the target model may be unique, so determining the first identity based on the second identity helps to improve the accuracy of determining the target model. The second identity may be represented in a binary representation, for example, 4 bits may be used to represent the second identity, and up to 16 different second identities may be represented. As an example, the binary values of the second identity may be as shown in Table 1. Alternatively, the second identity may be represented in a decimal representation, for example, 4 bits may be used to represent the second identity, and up to 10,000 different second identities may be represented. As an example, the decimal values of the second identity may be as shown in Table 2.

**Table 1 Example table of binary values of a second identity**

| Second identity | Model scheme |
|---|---|
| 0001 | First model |
| 0010 | Second model |
| 1001 | XX-th model |
| 1100 | XXX-th model |
| ...... | ...... |

**Table 2 Example table of decimal values of a second identity**

| Second identity | Model scheme |
|---|---|
| 0001 | First model |
| 0002 | Second model |
| 0023 | XX-th model |
| 0057 | XXX-th model |
| ...... | ...... |

As another example, the first identity may be determined based on the third identity, e.g. the first identity may be the third identity. In an embodiment of the present application, the third identity may correspond to a configuration when the target model is used, and different third identities may correspond to different configurations when the target model is used. The configuration when the target model is used may be a configuration required by the communication device when using the target model, or may be a configuration supported by the communication device when using the target model. For example, when the communication device performs CSI feedback by using the target model, the configuration when the target model is used may include the configuration of antenna, the configuration of reference signal, the configuration of CSI feedback level, the configuration of feedback manner, the configuration of feedback quantity, the configuration of CSI prediction, and the like. For another example, when the communication device performs beam measurement by using the target model, the configuration when the target model is used may include the configuration of beam measurement, the configuration of beam prediction, and the like. For another example, when the communication device performs positioning by using the target model, the configuration when the target model is used may include the configuration of positioning measurement, the configuration of positioning reporting content, the configuration of quantification manner for measurement reporting, the configuration of the number of base stations (for example, the number of positioning base stations), and the like. Since different configurations when the target model is used result in different target models, determining the first identity based on the third identity helps to improve the accuracy of determining the target model. The third identity may be represented in a binary representation, for example, 4 bits may be used to represent the third identity, and up to 16 different third identities may be represented. As an example, the binary values of the third identity may be as shown in Table 3. Alternatively, the third identity may be represented in a decimal representation, for example, 2 bits may be used to represent the third identity, and up to 100 different third identities may be represented. As an example, the decimal values of the third identity may be as shown in Table 4.

**Table 3 Example table of binary values of a third identity**

| Third identity | Configuration information |
|---|---|
| 0001 | First antenna configuration |
| 0010 | X-th antenna configuration |
| 1001 | First reference signal configuration |
| 1100 | XX-th reference signal configuration |
| 0110 | First CSI feedback configuration |
| 0111 | XXX-th CSI feedback configuration |
| 0101 | First CSI prediction configuration |
| 0100 | XXXX-th CSI prediction configuration |
| ...... | ...... |

**Table 4 Example table of decimal values of a third identity**

| Third identity | Model scheme |
|---|---|
| 1 | First antenna configuration |
| 2 | X-th antenna configuration |
| 3 | First reference signal configuration |
| 4 | XX-th reference signal configuration |
| 5 | First CSI feedback configuration |
| 6 | XXX-th CSI feedback configuration |
| 7 | First CSI prediction configuration |
| 8 | XXXX-th CSI prediction configuration |
| ...... | ...... |

As another example, the first identity may be determined based on the fourth identity, e.g. the first identity may be the fourth identity. In an embodiment of the present application, the fourth identity may correspond to a usage scenario of the target model, and different fourth identities may correspond to different usage scenarios of the target model. The usage scenario of the target model may be a scenario required by the communication device when using the target model, or the usage scenario of the target model may be a scenario supported by the communication device when using the target model. For example, the usage scenario of the target model may be indoor, outdoor, dense city, empty suburb, factory, railway or another different environment. Since different usage scenarios of the target model result in different target models, determining the first identity based on the fourth identity helps to improve the accuracy of determining the target model. The fourth identity may be represented in a binary representation, for example, 4 bits may be used to represent the fourth identity, and up to 16 different fourth identities may be represented. As an example, the binary values of the fourth identity may be as shown in Table 5. Alternatively, the fourth identity may be represented in a decimal representation, for example, 2 bits may be used to represent the fourth identity, and up to 100 different fourth identities may be represented. As an example, the decimal values of the fourth identity may be as shown in Table 6.

**Table 5 Example table of binary values of a fourth identity**

| Fourth identity | Configuration information |
|---|---|
| 0001 | Indoor |
| 0010 | Outdoor small cell |
| 0011 | Outdoor macro cell |
| 0100 | Dense city |
| 0101 | Empty suburb |
| 0110 | Factory |
| 0111 | Railway |
| 1000 | More XXXX scenario settings |
| ...... | ...... |

**Table 6 Example table of decimal values of a fourth identity**

| Fourth identity | Model scheme |
|---|---|
| 1 | Indoor |
| 2 | Outdoor small cell |
| 3 | Outdoor macro cell |
| 4 | Dense city |
| 5 | Empty suburb |
| 6 | Factory |
| 7 | Railway |
| ...... | ...... |

As another example, the first identity may be determined based on the fifth identity, e.g. the first identity may be the fifth identity. In an embodiment of the present application, the fifth identity may correspond to a speed when the target model is used, and different fifth identities may correspond to different speeds when the target model is used. The speed when the target model is used may be a speed required by the communication device when using the target model, or may be a speed supported by the speed device when using the target model. For example, the speed when the target model is used may be a speed limit for the wireless communication application such as static, low speed, medium speed, high speed, ultra-high speed, or the like. Since different speeds when the target model is used result in different target models, determining the first identity based on the fifth identity helps to improve the accuracy of determining the target model. The fifth identity may be represented in a binary representation, for example, 4 bits may be used to represent the fifth identity, and up to 16 different fifth identities may be represented. As an example, the binary values of the fifth identity may be as shown in Table 7. Alternatively, the fifth identity may be represented in a decimal representation, for example, 2 bits may be used to represent the fifth identity, and up to 100 different fifth identities may be represented. As an example, the decimal values of the fifth identity may be as shown in Table 8.

**Table 7 Example table of binary values of a fifth identity**

| Fifth identity | Configuration information |
|---|---|
| 0001 | Static |
| 0010 | Low speed |
| 0011 | Medium speed |
| 0100 | High speed |
| 0101 | Ultra-high speed |
| 0110 | High-speed railway |
| 0111 | Aviation |
| 1000 | More XXXX speed condition settings |
| ...... | ...... |

**Table 8 Example table of decimal values of a fifth identity**

| Fifth identity | Model scheme |
|---|---|
| 1 | Static |
| 2 | Low speed |
| 3 | Medium speed |
| 4 | High speed |
| 5 | Ultra-high speed |
| 6 | High-speed railway |
| 7 | Aviation |
| 8 | More XXXX speed condition settings |
| ...... | ...... |

As another example, the first identity may be determined based on the sixth identity, e.g. the first identity may be the sixth identity. In an embodiment of the present application, the sixth identity may correspond to a model type of the target model, and different sixth identities may correspond to different model types of the target model. The model type of the target model may be a convolutional neural network (CNN) type, a deep neural network (DNN) type, a residual neural network (ResNet) type, a transformer type, a mixer type, a variational autoencoder (VAE) type, a model type available for CSI feedback (such as CsiNet type, eigenvector-based CsiNet type, EVCsiNet type, EVCsiNet-T type), and the like. Since different model types of the target model result in different target models, determining the first identity based on the sixth identity helps to improve the accuracy of determining the target model. The sixth identity may be represented in a binary representation, for example, 8 bits may be used to represent the sixth identity, and up to 256 different sixth identities may be represented. Alternatively, the sixth identity may be represented in a decimal representation, for example, 3 bits may be used to represent the sixth identity, and up to 1000 different sixth identities may be represented.

As another example, the first identity may be determined based on the seventh identity, e.g. the first identity may be the seventh identity. In an embodiment of the present application, the seventh identity may correspond to a model platform type of the target model, and different seventh identities may correspond to different model platform types of the target model. The model platform type of the target model may be a platform type such as TensorFlow version, PyTorch version, ONNX version, Caffe2 version, MXNet version, ML.NET version, TensorRT version, Microsoft CNTK version, etc. Since different model platform types of the target model result in different target models, determining the first identity based on the seventh identity helps to improve the accuracy of determining the target model. The seventh identity may be represented in a binary representation, for example, 8 bits may be used to represent the seventh identity, and up to 256 different seventh identities may be represented. Alternatively, the seventh identity may be represented in a decimal representation, for example, 3 bits may be used to represent the seventh identity, and up to 1000 different seventh identities may be represented.

As another example, the first identity may be determined based on the eighth identity, e.g. the first identity may be the eighth identity. In an embodiment of the present application, the eighth identity may correspond to an interface format of the target model, and different eighth identities may correspond to different interface formats of the target model. The interface format of the target model may be an interface format of an output interface or an interface format of an input interface, and may include an input size, an input format, an output size, an output format, and the like. For example, different transmit antenna dimensions, different receive antenna dimensions, different bandwidth dimensions, different sub-band dimensions, different numbers of air interface feedback, different numbers of positioning information measurement of base station, different measurement numbers of beam, etc. Since different interface formats of the target model result in different target models, determining the first identity based on the eighth identity helps to improve the accuracy of determining the target model.

Further, one eighth identity may correspond to one interface format of the target model. For example, one eighth identity corresponds to one receive antenna dimension, and another eighth identity corresponds to one bandwidth dimension. Alternatively, one eighth identity may correspond to multiple interface formats of the target model. For example, one eighth identity may correspond to one bandwidth dimension and one subband dimension. In addition, one eighth identity may be composed of multiple sub-identities, and different sub-identities among the multiple sub-identities respectively correspond to different interface formats of the target model. For example, the eighth identity may be composed of a first sub-identity, a second sub-identity and a third sub-identity. The first sub-identity corresponds to a receiving antenna dimension, the second sub-identity corresponds to a subband dimension, and the third sub-identity corresponds to a bandwidth dimension.

The eighth identity may be represented in a binary representation, for example, 7 bits may be used to represent the eighth identity, and up to 128 different eighth identities may be represented. Alternatively, the eighth identity may be represented in a decimal representation, for example, 2 bits may be used to represent the eighth identity, and up to 100 different eighth identities may be represented.

As another example, the first identity may be determined based on the ninth identity, e.g. the first identity may be the ninth identity. In an embodiment of the present application, the ninth identity may correspond to a performance of the target model, and different ninth identities may correspond to different performances of the target model. The performance of the target model may be the precision of the target model, such as different levels of CSI recovery precision, different levels of CSI prediction precision, different levels of positioning precision, and different levels of channel estimation precision. The performance of the target model may also be the accuracy of the target model, such as the accuracy of different levels of beam selection, the accuracy of different levels of beam prediction. The performances of the target model may also be other performances of the target model, such as different levels of system throughput efficiency brought by the target model, different levels of block error rate (BLER) brought by the target model, different levels of handover failure count brought by the target model, different levels of ping-pong handover count brought by the target model, etc. Since different performances of the target model result in different target models, determining the first identity based on the ninth identity helps to improve the accuracy of determining the target model. The ninth identity may be represented in a binary representation, for example, 4 bits may be used to represent the ninth identity, and up to 16 different ninth identities may be represented. Alternatively, the ninth identity may be represented in a decimal representation, for example, 1 bit may be used to represent the ninth identity, and up to 10 different ninth identities may be represented.

As another example, the first identity may be determined based on the tenth identity, e.g. the first identity may be the tenth identity. In an embodiment of the present application, the tenth identity may correspond to a training data type of the target model, and different tenth identities may correspond to different training data types of the target model. The training data types of the target model may be different training data types, different training data volumes, and the like. Since different training data types of the target model result in different target models, determining the first identity based on the tenth identity helps to improve the accuracy of determining the target model. The tenth identity may be represented in a binary representation, for example, 7 bits may be used to represent the tenth identity, and up to 128 different tenth identities may be represented. Alternatively, the tenth identity may be represented in a decimal representation, for example, 2 bits may be used to represent the tenth identity, and up to 100 different tenth identities may be represented.

As another example, the first identity may be determined based on the eleventh identity, e.g. the first identity may be the eleventh identity. In an embodiment of the present application, the eleventh identity may correspond to a quantization scheme of the target model, and different eleventh identities may correspond to different quantization schemes of the target model. The quantization schemes of the target model may be different quantization or dequantization schemes, such as vector quantization, scalar quantization, uniform quantization, non-uniform quantization, AI-based quantization or dequantization, and the like. The quantization schemes of the target model may also be different sizes of quantization overhead or different levels of quantization precision. Since different quantization schemes of the target model result in different target models, determining the first identity based on the eleventh identity helps to improve the accuracy of determining the target model. The eleventh identity may be represented in a binary representation, for example, 4 bits may be used to represent the eleventh identity, and up to 16 different eleventh identities may be represented. Alternatively, the eleventh identity may be represented in a decimal representation, for example, 2 bits may be used to represent the eleventh identity, and up to 100 different eleventh identities may be represented.

As another example, the first identity may be determined based on the twelfth identity, e.g. the first identity may be the twelfth identity. In an embodiment of the present application, the twelfth identity may correspond to a complexity level of the target model, and different twelfth identities may correspond to different complexity levels of the target model. The complexity levels of the target model may be different levels of computing power unit (such as tera operations per second (TOPS), floating point operation per second (FLOPS), etc.). Since different complexity levels of the target model result in different target models, determining the first identity based on the twelfth identity helps to improve the accuracy of determining the target model. The twelfth identity may be represented in a binary representation, for example, 4 bits may be used to represent the twelfth identity, and up to 16 different twelfth identities may be represented. Alternatively, the twelfth identity may be represented in a decimal representation, for example, 2 bits may be used to represent the twelfth identity, and up to 100 different twelfth identities may be represented.

As another example, the first identity may be determined based on the thirteenth identity, e.g. the first identity may be the thirteenth identity. In an embodiment of the present application, the thirteenth identity may correspond to a size of the target model, and different thirteenth identities may correspond to different sizes of the target model. Since different sizes of the target model result in different target models, determining the first identity based on the thirteenth identity helps to improve the accuracy of determining the target model. The thirteenth identity may be represented in a binary representation, for example, 4 bits may be used to represent the thirteenth identity, and up to 16 different thirteenth identities may be represented. Alternatively, the thirteenth identity may be represented in a decimal representation, for example, 2 bits may be used to represent the thirteenth identity, and up to 100 different thirteenth identities may be represented.

Further, the first identity may be determined based on multiple identities among the second identity to the thirteenth identity. For example, the first identity may be a combination of multiple identities among the second identity to the thirteenth identity, and the combination manner of the multiple identities may not be limited. For example, the first identity may be a combination of a second identity, a tenth identity, and an eleventh identity. The first identity determined based on multiple identities among the above identities may more comprehensively indicate a usage condition and/or a usage scenario of the target model, which is helpful to improve the accuracy of determining the target model.

In other implementations, the first identity may also be associated with a usage area and/or a usage organization of the target model. The models having the first function are also distinguished under different usage areas and/or usage organizations, so that the usage area and/or usage organization of the target model may also be used to distinguish the models having the first function. The use area and/or use organization of the target model may refer to a construction or management body of the target model, such as a specific country that uses the target model, a specific area that uses the target model (for example, a state, a province, a city, a county, etc.), a specific organization that uses the target model (for example, an operator, a base station manufacturer, a terminal manufacturer, a third-party wireless AI solution provider), and the like.

Further, the first identity may be determined based on one or more of the following identities: a fourteenth identity, a fifteenth identity, or a sixteenth identity.

As an example, the first identity may be determined based on the fourteenth identity, e.g. the first identity may be the fourteenth identity. In an embodiment of the present application, the fourteenth identity may correspond to a usage country of the target model. The usage country of the target model may be a country or region where the target model is used, and one usage country of the target model may at least correspond to one fourteenth identity. Since different usage countries of the target model result in different target models, determining the first identity based on the fourteenth identity helps to improve the accuracy of determining the target model. The fourteenth identity may be represented in a binary representation, for example, 8 bits may be used to represent the fourteenth identity, and up to 256 different fourteenth identities may be represented. Alternatively, the fourteenth identity may be represented in a decimal representation, for example, 3 bits may be used to represent the fourteenth identity, and up to 1000 different fourteenth identities may be represented.

As another example, the first identity may be determined based on the fifteen identity, e.g. the first identity may be the fifteen identity. In an embodiment of the present application, the fifteenth identity may correspond to a usage area of the target model. The usage area of the target model may be a state, a province, a city, a county, a preset area, or the like, and one usage area of the target model may at least correspond to one fifteenth identity. Since different usage areas of the target model result in different target models, determining the first identity based on the fifteenth identity helps to improve the accuracy of determining the target model. The fifteenth identity may be represented in a binary representation, for example, 7 bits may be used to represent the fifteenth identity, and up to 256 different fifteenth identities may be represented. Alternatively, the fifteenth identity may be represented in a decimal representation, for example, 4 bits may be used to represent the fifteenth identity, and up to 10000 different fifteenth identities may be represented.

As another example, the first identity may be determined based on the sixteenth identity, e.g. the first identity may be the sixteenth identity. In an embodiment of the present application, the sixteenth identity may correspond to a usage organization of the target model, and different sixteenth identities may correspond to different usage organizations of the target model. The usage organization of the target model may refer to an organization providing the target model, such as an operator of the target model, a communication service provider, a wireless AI solution provider, and the like. The usage organization of the target model may also refer to an organization involved in tuning the target model, such as a base station manufacturer, a terminal manufacturer, and the like. Since different usage organizations of the target model result in different target models, determining the first identity based on the sixteenth identity helps to improve the accuracy of determining the target model. The sixteenth identity may be represented in a binary representation, for example, 16 bits may be used to represent the sixteenth identity, and up to 65536 different sixteenth identities may be represented. Alternatively, the sixteenth identity may be represented in a decimal representation, for example, 6 bits may be used to represent the sixteenth identity, and up to 1000000 different sixteenth identities may be represented.

One usage organization of the target model may at least correspond to one sixteenth identity. Further, one sixteenth identity may correspond to multiple usage organizations of the target model. For example, when multiple organizations jointly participate in target model tuning, the sixteenth identity may correspond to the multiple organizations jointly participating in target model tuning. In an implementation, the sixteenth identity may be sequentially superposed by sixteenth identities of respective organizations jointly participating in target model tuning. For example, the multiple organizations jointly participating in target model tuning include a first organization, a second organization, and a third organization. The corresponding sixteenth identity may be in the following form: the sixteenth identity of the first organization + the sixteenth identity of the second organization + the sixteenth identity of the third organization (different superposition orders may represent different target models). In another implementation, the sixteenth identity may be a joint identity of multiple organizations jointly participating in the target model tuning, and the form of the joint identity is not limited. At this time, if the sixteenth identity is represented in a binary representation, 10 bits may be used to represent up to 1024 different sixteenth identities. If the sixteenth identity is represented in a decimal representation, 3 bits may be used to represent up to 1000 different sixteenth identities.

Further, the first identity may be determined based on multiple identities among the fourteenth identity to the sixteenth identity. For example, the first identity may be a combination of multiple identities among the fourteenth identity to the sixteenth identity, and the combination manner of the multiple identities may not be limited. For example, the first identity may be a combination of a fourteenth identity and a sixteenth identity. The first identity determined based on multiple identities among the above identities may more comprehensively indicate a usage area and/or a usage organization of the target model, which is helpful to improve the accuracy of determining the target model.

The first identity has been described in detail above, and how to determine the target model from the model having the first function through the first identity will be described in detail below. In order to facilitate understanding, a second communication device is used below to represent other communication devices other than the first communication device. The second communication device may be the network device 110 or the terminal device 120 illustrated in FIG. 1.

In some implementations, the first identity may be used to determine a first identity supported by the communication device, based on which a target model supported by the communication device among the models having the first function may be determined.

As an example, the first communication device may determine a first identity supported by the second communication device through the first identity. Based on this, the first communication device determining the first identity (operation S310) may include that the first communication device receives the first information. For example, as illustrated in operation S410 of FIG. 4A, the first communication device may receive first information sent by a second communication device. The first information may be used to indicate a first identity supported by the second communication device. The first communication device may determine a first identity supported by the second communication device based on the first information, thereby further determining, based on the first identity, a target model supported by the second communication device from the models having the first function. For example, if the first identity indicated by the first information may be associated with a usage scenario of the target model supported by the second communication device, the first communication device may determine, based on the usage scenario, the target model supported by the second communication device from the models having the first function.

As another example, the second communication device may determine a first identity supported by the first communication device through the first identity. Based on this, the method illustrated in FIG. 3 also may include that the first communication device sends second information. For example, as illustrated in operation S410 of FIG. 4B, the first communication device may send the second information to the second communication device. The second information may be used to indicate first first identity supported by the first communication device. The second communication device may determine a first identity supported by the first communication device based on the second information, thereby determining, based on the first identity, a target model supported by the first communication device from the models having the first function. For example, if the first identity indicated by the second information may be associated with a usage condition of the target model supported by the first communication device, the first communication device may determine, based on the usage condition, the target model supported by the first communication device from the models having the first function.

In other implementations, the first identity may be used to determine a first identity required by the communication device, based on which a target model required by the communication device among the models having the first function may be determined.

As an example, the first communication device may determine a first identity required by the second communication device through the first identity. Based on this, the first communication device determining the first identity (operation S310) may include that the first communication device receives the third information. For example, as illustrated in operation S510 of FIG. 5A, the first communication device may receive third information sent by the second communication device. The third information may be used to indicate a first identity required by the second communication device. The first communication device may determine a first identity required by the second communication device based on the third information, thereby further determining, based on the first identity, a target model required by the second communication device from the models having the first function. For example, if the first identity indicated by the third information may be associated with a usage country of the target model required by the second communication device, the first communication device may determine, based on the usage country, the target model required by the second communication device from the models having the first function.

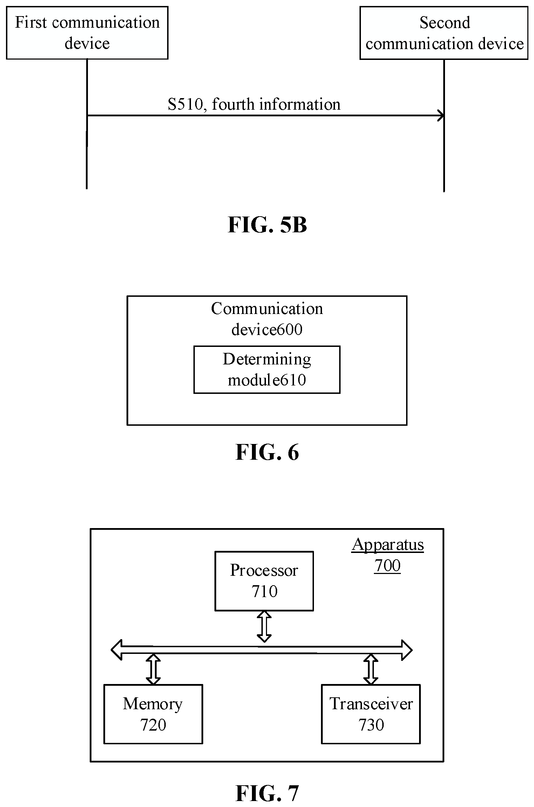

As another example, the second communication device may determine a first identity required by the first communication device through the first identity. Based on this, the method illustrated in FIG. 3 also may include that the first communication device sends fourth information. For example, as illustrated in operation S510 of FIG. 5B, the first communication device may send the fourth information to the second communication device. The fourth information may be used to indicate first first identity required by the first communication device. The second communication device may determine a first identity required by the first communication device based on the fourth information, thereby determining, based on the first identity, a target model required by the first communication device from the models having the first function. For example, if the first identity indicated by the fourth information may be associated with a usage region of the target model required by the first communication device, the first communication device may determine, based on the usage region, the target model required by the first communication device from the models having the first function.

In summary, the first identity can be used to determine a target model supported by the communication device or a target model required by the communication device from the models having the first function, which helps to more accurately determine the target model.

Continuing with reference to the method illustrated in FIG. 3, it was mentioned above that the first identity can be used to determine the target model from the models having the first function, and thus the communication device can also indicate the first function. Based on this, the method illustrated in FIG. 3 may also include that the first communication device receives or sends fifth information, and the fifth information may be used to indicate the first function. Further, the fifth information may include a seventeenth identity, the seventeenth identity corresponds to the first function, and the seventeenth identity may be a function ID or another type of indication identity.

Method embodiments of the present application are described in detail above with reference to FIGS. 1 to 5, and apparatus embodiments of the present application are described in detail below with reference to FIGS. 6 to 7. It should be understood that the description of the method embodiment and the description of the device embodiment correspond to each other. Therefore, the portions not described in detail can be referred to the foregoing method embodiments.

FIG. 6 is a schematic diagram of a structure of a communication device according to an embodiment of the present application. The communication device 600 in FIG. 6 includes a determination module 610. The determining module 610 is used for determining a first identity. The first identity is used to indicate a usage condition and/or a usage scenario of a target model, or the first identity is used to determine the target model from models having a first function.

In some implementations, the first identity may be associated with a usage condition and/or a usage scenario of the target model.

In some implementations, the first identity is determined based on one or more of the following identities: a second identity corresponding to a sequence number of the target model; a third identity corresponding to a configuration when the target model is used; a fourth identity corresponding to a usage scenario of the target model; a fifth identity corresponding to a speed when the target model is used; a sixth identity corresponding to a model type of the target model; a seventh identity corresponding to a model platform type of the target model; an eighth identity corresponding to an interface format of the target model; a ninth identity corresponding to a performance of the target model; a tenth identity corresponding to a training data type of the target model; an eleventh identity corresponding to a quantization scheme of the target model; a twelfth identity corresponding to a complexity level of the target model; or a thirteenth identity corresponding to a size of the target model.

In some implementations, the first identity is associated with a usage area and/or a usage organization of the target model.

In some implementations, the first identity is determined based on one or more of the following identities: a fourteenth identity corresponding to a usage country of the target model; a fifteenth identity corresponding to a usage area of the target model; or a sixteenth identity corresponding to a usage organization of the target model.

In some implementations, the determination module 610 is further used to receive first information, the first information is used to indicate the first identity supported by a second communication device.

In some implementations, the communication device further includes a first communication module 620. The first communication module 620 is used for sending second information, the second information is used to indicate the first identity supported by the first communication device.

In some implementations, the determination module 610 is further used to receive third information, the third information is used to indicate the first identity required by a second communication device.

In some implementations, the communication device further includes a second communication module 630. The second communication module 630 is used for sending fourth information, the fourth information is used to indicate the first identity required by the first communication device.

In some implementations, the communication device further includes a third communication module 640. The third communication module 640 is used for receiving or sending fifth information, the fifth information is used to indicate the first function.

In some implementations, the fifth information includes a seventeenth identity, the seventeenth identity corresponds to the first function.

FIG. 7 is a schematic diagram of a structure of an apparatus according to an embodiment of the present application. The apparatus 700 in FIG. 7 may be used to implement the methods described in the above method embodiments. The apparatus 700 may be a chip, a terminal device, or a base station.

The apparatus 700 may include one or more processors 710. The processor 710 may support the apparatus 700 to implement the methods described in the above method embodiments. The processor 710 may be a general-purpose processor or a special-purpose processor. For example, the processor may be a central processing unit (CPU). Alternatively, the processor may also be another general-purpose processor, a digital signal processor (DSP), an application specific integrated circuit (ASIC), an field programmable gate array (FPGA) or other programmable logic device, a discrete gate or transistor logic device, or a discrete hardware component. The general-purpose processor may be a microprocessor, or the processor may be any conventional processor or the like.

The apparatus 700 may also include one or more memories 720. The memory 720 has stored a program, and the program may be executed by the processor 710, to cause the processor 710 to perform the methods described in the above method embodiments. The memory 720 may a separate device independent of the processor 710, or may be integrated in the processor 710.

The apparatus 700 may also include a transceiver 730. The processor 710 may communicate with other devices or chips through the transceiver 730. For example, the processor 710 may send and receive data with other devices or chips through the transceiver 730.

It should be understood that in the embodiments of the present application, the processor 710 may employ a general-purpose central processing unit (CPU), a microprocessor, an application specific integrated circuit (ASIC), or one or more integrated circuits, and be used for executing related programs to implement the technical solutions provided in the embodiments of the present application.

The memory 720 may include a read-only memory and a random access memory, and provide instructions and data for the processor 710. A part of the processor 710 may also include a non-volatile random access memory. For example, the processor 710 may also store information of a device type.

In the implementation process, the operations of the above-described methods may be completed by integrated logic circuits in the form of hardware or instructions in the form of software in the processor 710. The method for requesting an uplink transmission resource disclosed in combination with the embodiments of the present application may be directly executed by the hardware processor, or may be executed by combining hardware and software modules in the processor. The software module may be located in a storage medium mature in the art, such as a random access memory, a flash memory, a read-only memory, a programmable read-only memory, or an electrically erasable and writable programmable memory, a register, etc. The storage medium is located in the memory 720, and the processor 710 reads the information in the memory 720, and combines its hardware to complete the operations of the above method. In order to avoid repetition, detailed description will not be made here.

It should be understood that in the embodiments of the present application, the processor 710 may be a central processing unit (CPU), or the processor may be another general-purpose processor, a digital signal processor (DSP), an application specific integrated circuit (ASIC), an field programmable gate array (FPGA) or other programmable logic device, a discrete gate or transistor logic device, or a discrete hardware component. The general-purpose processor may be a microprocessor, or the processor may be any conventional processor or the like.

An embodiment of the present application also provides a computer-readable storage medium for storing a program. The computer-readable storage medium may be applied to the communication device provided by the embodiment of the present application, and the program causes the computer to execute the method for wireless communication in the various embodiments of the present application.

An embodiment of the present application also provides a computer program product. The computer program product includes a program. The computer program product may be applied to the communication device provided by the embodiment of the present application, and the program causes the computer to execute the method for wireless communication in the various embodiments of the present application.

An embodiment of the present application also provides a computer program. The computer program may be applied to the communication device provided by the embodiment of the present application, and the computer program causes the computer to execute the method for wireless communication in the various embodiments of the present application.

It should be understood that the term "and/or" herein is only an association relationship describing associated objects, and indicates that there may be three kinds of relationships. For example, A and/or B may indicate that A exists alone, A and B exist simultaneously, and B exists alone. In addition, the character "/" herein generally indicates that the associated objects are in an "or" relationship.

It should be understood that in various embodiments of the present application, the size of the sequence number in the above-described process does not mean the sequence of execution (the sequence of execution in each process should be determined by its function and internal logic), and should not constitute any limitation on the implementation of the embodiments of the present application.

It should be understood that the disclosed system, apparatus and method in several embodiments provided in the present disclosure, may be implemented in other manners. For example, the device embodiments described above are merely schematic, for example, the division of units is only a logical function division, and there may be other division manners in actual implementation. For example, multiple units or components may be combined, or may be integrated into another system; some features may be ignored or not executed. In addition, the coupling or direct coupling or communication connection between each other illustrated or discussed may be an indirect coupling or communication connection through some interfaces, devices or units, which may be electrical, mechanical or otherwise.

The units described as separate components may or may not be physically separate, and the units displayed as units may or may not be physical units, that is, they may be located in one place or may be distributed over multiple network units. Some or all of the units may be selected according to actual needs to achieve the purpose of the solution of the present embodiment.

Furthermore, various functional units in the embodiments of the present application may be integrated into one processing unit or physically present alone, or two or more units may be integrated in one unit.

In the embodiments described above, it may be implemented in whole or in part by software, hardware, firmware, or any combination thereof. When implemented by using software, it may be implemented in whole or in part in the form of a computer program product. The computer program product includes one or more computer instructions. When the computer program instructions are loaded and executed on a computer, the processes or functions according to the embodiments of the present application are generated in whole or in part. The computer may be a general purpose computer, a special purpose computer, a computer network, or other programmable apparatus. The computer instructions may be stored in a computer-readable storage medium or transmitted from one computer-readable storage medium to another computer-readable storage medium. For example, the computer instructions may be transmitted from one website site, computer, server, or data center to another website site, computer, server, or data center in the wired (e.g., coaxial cable, optical fiber, digital subscriber line (DSL)) or wireless (e.g., infrared, wireless, microwave, etc.) manner. The computer-readable storage medium may be any available medium read by a computer, or may be a data storage device such as a server, a data center, or the like that integrates one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above are merely detailed embodiments of the present application, but the protection scope of the present application is not limited thereto, and any person skilled in the art can easily think of changes or substitutions within the technical scope disclosed in the present application, which should be covered within the protection scope of the present application.

## Claims

1. A method for wireless communication, comprising:
determining, by a first communication device, a first identity, wherein the first identity is used to indicate a usage condition and/or a usage scenario of a target model, or the first identity is used to determine the target model from models having a first function.

2. The method of claim 1, wherein the first identity is associated with the usage condition and/or the usage scenario of the target model.

3. The method of claim 2, wherein the first identity is determined based on one or more of the following identities:
a second identity corresponding to a serial number of the target model;
a third identity corresponding to a configuration when the target model is used;
a fourth identity corresponding to a usage scenario of the target model;
a fifth identity corresponding to a speed when the target model is used;
a sixth identity corresponding to a model type of the target model;
a seventh identity corresponding to a model platform type of the target model;
an eighth identity corresponding to an interface format of the target model;
a ninth identity corresponding to a performance of the target model;
a tenth identity corresponding to a training data type of the target model;
an eleventh identity corresponding to a quantification scheme of the target model;
a twelfth identity corresponding to a complexity level of the target model; or
a thirteenth identity corresponding to a size of the target model.

4. The method of claim 1, wherein the first identity is associated with a usage area and/or a usage organization of the target model.

5. The method of claim 4, wherein the first identity is determined based on one or more of the following identities:
a fourteenth identity corresponding to a usage country of the target model;
a fifteenth identity corresponding to a usage area of the target model; or
a sixteenth identity corresponding to a usage organization of the target model.

6. The method of any one of claims 1-5, wherein determining, by the first communication device, the first identity comprises:
receiving, by the first communication device, first information, wherein the first information is used to indicate the first identity supported by a second communication device.

7. The method of any one of claims 1-5, further comprising:
sending, by the first communication device, second information, wherein the second information is used to indicate the first identity supported by the first communication device.

8. The method of any one of claims 1-5, wherein determining, by the first communication device, the first identity comprises:
receiving, by the first communication device, third information, wherein the third information is used to indicate the first identity required by a second communication device.

9. The method of any one of claims 1-5, further comprising:
sending, by the first communication device, fourth information, wherein the fourth information is used to indicate the first identity required by the first communication device.

10. The method of any one of claims 1-9, further comprising:
receiving or sending, by the first communication device, fifth information, wherein the fifth information is used to indicate the first function.

11. The method of claim 10, wherein the fifth information comprises a seventeenth identity, and the seventeenth identity corresponds to the first function.

12. A communication device, wherein the communication device is a first communication device, and the communication device comprises:
a determining module for determining a first identity, wherein the first identity is used to indicate a usage condition and/or a usage scenario of a target model, or the first identity is used to determine the target model from models having a first function.

13. The communication device of claim 12, wherein the first identity is associated with the usage condition and/or the usage scenario of the target model.

14. The communication device of claim 13, wherein the first identity is determined based on one or more of the following identities:
a second identity corresponding to a serial number of the target model;
a third identity corresponding to a configuration when the target model is used;
a fourth identity corresponding to a usage scenario of the target model;
a fifth identity corresponding to a speed when the target model is used;
a sixth identity corresponding to a model type of the target model;
a seventh identity corresponding to a model platform type of the target model;
an eighth identity corresponding to an interface format of the target model;
a ninth identity corresponding to a performance of the target model;
a tenth identity corresponding to a training data type of the target model;
an eleventh identity corresponding to a quantification scheme of the target model;
a twelfth identity corresponding to a complexity level of the target model; or
a thirteenth identity corresponding to a size of the target model.

15. The communication device of claim 12, wherein the first identity is associated with a usage area and/or a usage organization of the target model.

16. The communication device of claim 15, wherein the first identity is determined based on one or more of the following identities:
a fourteenth identity corresponding to a usage country of the target model;
a fifteenth identity corresponding to a usage area of the target model; or
a sixteenth identity corresponding to a usage organization of the target model.

17. The communication device of any one of claims 12-16, wherein the determining module is further used to:
receive first information, wherein the first information is used to indicate the first identity supported by a second communication device.

18. The communication device of any one of claims 12-16, wherein the communication device further comprises:
a first communication module for sending second information, wherein the second information is used to indicate the first identity supported by the first communication device.

19. The communication device of any one of claims 12-16, wherein the determining module is further used to:
receive third information, wherein the third information is used to indicate the first identity required by a second communication device.

20. The communication device of any one of claims 12-16, wherein the communication device further comprises:
a second communication module for sending fourth information, wherein the fourth information is used to indicate the first identity required by the first communication device.

21. The communication device of any one of claims 12-20, wherein the communication device further comprises:
a third communication module for receiving or sending fifth information, wherein the fifth information is used to indicate the first function.

22. The communication device of claim 21, wherein the fifth information comprises a seventeenth identity, and the seventeenth identity corresponds to the first function.

23. A communication device, comprising: a transceiver, a memory and a processor, wherein the memory is used to store a program, and the processor is used to call the program in the memory and control the transceiver to receive or send a signal, to cause the communication device to perform the method of any one of claims 1-11.

24. An apparatus, comprising a processor, wherein the processor is used for calling a program from a memory, to cause the apparatus to perform the method of any one of claims 1-11.

25. A chip, comprising a processor, wherein the processor is used for calling a program from a memory, to cause a device on which the chip is mounted to perform the method of any one of claims 1-11.

26. A computer readable storage medium, having stored thereon a program that causes a computer to perform the method of any one of claims 1-11.

27. A computer program product, comprising a program that causes a computer to perform the method of any one of claims 1-11.

28. A computer program, causing a computer to perform the method of any one of claims 1-11.
